# EUROPÄISCHE PATENTSCHRIFT

(11) **EP 1 742 592 B1**
(45) Veröffentlichungstag und Bekanntmachung des Hinweises auf die Patenterteilung: **22.12.2010**
(21) Anmeldenummer: 05747733.3
(22) Anmeldetag: 03.05.2005
(51) Int. Cl.: A61C 9/00, A61C 8/00

(54) **ABFORMLÖFFEL**
IMPRESSION TRAY
PORTE-EMPREINTE

(30) Priorität: 05.05.2004 DE 102004022066
(43) Veröffentlichungstag der Anmeldung: 17.01.2007
(73) Patentinhaber: Haselhuhn, Klaus, 52062 Aachen (DE); Reimers, Jan-Dirk, 52068 Aachen (DE); Spiekermann, Hubertus, 42781 Haan (DE)
(72) Erfinder: Haselhuhn, Klaus, 52062 Aachen (DE); Reimers, Jan-Dirk, 52068 Aachen (DE); Spiekermann, Hubertus, 42781 Haan (DE)
(74) Vertreter: Bauer, Dirk
(86) Internationale Anmeldenummer: PCT/EP2005/004794
(87) Internationale Veröffentlichungsnummer: WO 2005/107632

(56) Entgegenhaltungen:
- DE-A1- 4 218 423
- US-A- 4 708 654
- US-A- 4 842 515
- US-A- 5 636 985
- US-A1- 2002 127 515
- US-A1- 2003 138 754
- US-B1- 6 379 147
- US-B1- 6 629 841
- US-B1- 6 666 684

## Beschreibung

Die Erfindung betrifft einen Abformlöffel mit konkavem Löffelkörper, welcher zum Anformen lediglich eines Kieferteils ausgebildet ist, in dem sich mindestens ein Implantatkörper befindet, der eine Aufnahmeöffnung besitzt, in die ein Abdruckpfosten einsetzbar ist, wobei der Abformlöffel mit einem fließfähigen, aushärtbaren Abformmaterial zur Herstellung einer Form für ein Modell des Kieferteils befüllbar ist, wobei der Löffelkörper zumindest in einem Abschnitt eine Wandung aufweist, die von einem in den Implantatkörper eingesetzten Abdruckpfosten durchstoßbar ist, wenn der Abformlöffel auf das Kieferteil aufgesetzt wird.

Bekanntermaßen werden bei Verlust eines oder mehrerer Zähne Ersatzwurzeln, so genannte Implantate, in den Kiefer eingepflanzt. Diese im Kiefer verankerten Stützen bilden das stabile Fundament für neue festsitzende Zähne. Größe und Form eines Implantates richten sich nach den individuellen Voraussetzungen des Kiefers des zu behandelnden Patienten. Vorraussetzung einer Zahnimplantation ist eine Mindestknochensubstanz des Kiefers.

Da Implantate osseointegriert (an einem Knochen verankert) sind und im Gegensatz zu natürlichen Zähnen - idealerweise - nicht die geringste Eigenbeweglichkeit aufweisen, kommt bei der Darstellung mehrerer Implantate der möglichst exakten dreidimensionalen Wiedergabe der Position der Einzelimplantate besondere Bedeutung zu.

Der im zahntechnischen Labor angefertigte Ersatz kann nur erfolgreich und spannungsfrei in die Mundhöhle inkorporiert werden, wenn es gelingt, die klinische Situation exakt auf ein Modell zu übertragen. Eine präzise Abformung ist dabei eine zwar nicht hinreichende, aber doch notwendige Bedingung einer implantologisch-prothetischen Versorgung.

Das Ziel jeder Abformung ist also das exakte zahnärztliche Modell. Es dient zur Diagnose, zu Planungs- und Therapiezwecken sowie als Arbeitsgrundlage für den Zahntechniker und soll eine präzise Kopie der in der Mundhöhle vorhandenen Strukturen darstellen.

Den Teil eines Implantatsystems, der im Knochen versenkt wird, bezeichnet man entweder als Implantatkörper oder vereinfacht als Implantat. Nachdem er in den Knochen eingebracht worden ist, wird der hohle Implantatkörper mit einer Deckschraube versehen.

Dann wird das Zahnfleisch über dem Implantatkörper vernäht. Nach einer mehrmonatigen Einheilphase legt der Arzt dann den Implantatkörper wieder frei, entfernt die Deckschraube und schraubt oder steckt an deren Stelle vorübergehend einen Abdruckpfosten ein.

Nach einer Abheilperiode von 10 bis 14 Tagen kann dann über die Abdruckpfosten der Abdruck mittels eines individuell geformten Abformlöffels für die spätere Anfertigung der Krone, Brücke oder Prothese genommen werden. Anschließend ersetzt man die Abdruckpfosten für wenige Tage durch Heilkappen. Die endgültigen neuen Zähne werden dann aber nicht direkt auf den Implantatkörpern, sondern auf Implantataufbauten befestigt. Implantataufbauten überbrücken die Dicke des Zahnfleisches, so dass das Zahnfleisch nicht zwischen Implantatkörper und Prothese gequetscht werden kann. Das gesunde Zahnfleisch lagert sich diesen Implantataufbauten wie einem natürlichen Zahn an. Die nunmehr von Implantataufbau und Implantatkörper gestützte Prothese nennt man Suprakonstruktion; diese ist mit Aufbauschrauben oder anderen Befestigungsprinzipien an den einzelnen Implantatkörpern befestigt.

Zur dreidimensionalen Positionsbestimmung des Implantatkörpers und dessen Übertragung auf das endgültige Labormodell werden folgende Schritte durchgeführt:
1. Abnahme eines Negativabdrucks von einem Kiefer oder einem Kieferteil mittels eines standardisierten Abformlöffels, wobei in den Implantatkörper eine innerhalb des Abformlöffels angeordnete Deckschraube eingeschraubt ist,
2.
   a) Herstellung eines ersten Labormodells anhand des Negativabdrucks,
   b) Fertigung eines individuellen Abformlöffels anhand des Labormodells, wobei die Abdrücke der Deckschraube aufgebohrt werden, um dort später einen Durchtritt eines Abdruckpfostens durch den Abformlöffel zu ermöglichen.
3.
   a) Entfernen des Implantatdeckels, Verankern eines mehrteiligen Abdruckpfostens im Kiefer, durch Einrasten oder Verschrauben,
   b) Befüllung des Abformlöffels mit Abformmaterial im Bereich der Bohrung,
   c) Aufsetzen des Abformlöffels auf den Kiefer, wobei der vom Abformmaterial umschlossene Abdruckpfosten durch die Bohrung über den Abformlöffel hinausragt,
   d) Nach dem Aushärten des Abformmaterials, Herausdrehen, Herausziehen oder Lösen der Abdruckpfosten, und Abnahme des Abformlöffels mit dem Abformmaterial, wobei eine den Abdruckpfosten seitlich umschließende Abdruckpfostenhülse im Abformmaterial verbleibt.
4.
   a) Nach der Desinfektion des Abformlöffels, Herstellung eines zweiten Labormodells wobei ein Laborimplantatkörper mittels eines Laborabdruckpfostens an der Abdruckpfostenhülse im Abformmaterial aufgesteckt bzw. verschraubt wird. Das Material zum Formen des zweiten Labormodells wird dabei auf die Laborimplantatkörper gespritzt. Mit Modellmaterialien, wie z. B. Gips oder Kunststoff wird die verbleibende Negativform des Labormodells ausgegossen. Nach Aushärtung der Modellmaterialien kann die Abdruckpfostenhalteschraube oder der Abdruckpfostenhaltestift wieder gelöst werden. Der Abformlöffel kann von dem Modell abgezogen werden.
   b) Auswahl und Einsetzen eines geeigneten Implantataufbaus in den Laborimplantatkörper des zweiten Labormodells, Anfertigung der Zahnprothese.

Alternativ kann auch die Repositionstechnik mit Konfektionslöffeln angewandt werden. Der große Vorteil ist, dass dem Patienten ein Behandlungstermin zur Herstellung des individuellen Abformlöffels erspart bleibt. Ein weiter Vorteil ist außerdem, dass die Kosten, die bei der Herstellung des individuellen Abformlöffels hinsichtlich Material- und Zeitaufwand entstehen bei der Repositionstechnik mit Konfektionslöffeln entfallen.

Jedoch ist bei dieser Technik von Nachteil, dass ihre Anwendung fehleranfällig und sie außerdem im Vergleich zur oben beschriebenen "Pick-up"-Technik nachgewiesen ungenauer ist, da u.a. der für die dreidimensionale Repositionierung der Lage des Implantatkörpers im Abformmaterial benötigte kanalförmige Abdruck des Abdruckpfostens nur durch kurze und ungenaue Abdrücke von Abdruckelementen ersetzt werden kann und somit für den Arzt und vor allem den Patienten zu unbefriedigenden Ergebnissen führt. Zudem führt eine Repositionierung des Abformlöffels zu großen Bewegungen im Abformmaterial, wodurch die Präzision des späteren Modells abnimmt.

Guillaume et al. offenbaren in der US 6 468 078 B2 einen Konfektionslöffel mit einer Mehrzahl von abnehmbaren Segmentverschlüssen. Abhängig von der Position des Abdruckpfostens - der als Hülse ausgebildet ist - wird vorgeschlagen, den darüber liegenden Segmentverschluss zu entfernen und danach das Material, welches noch den Abdruckpfosten und eine, diesen auf dem Implantatkörper fixierende, Schraube überdeckt, abzutragen bis wenigstens der Schraubenkopf vollständig frei liegt. Nach Aushärten des im Konfektionslöffel befindlichen Abformmaterials soll die Schraube gelöst werden. Der Abdruckpfosten verbleibt im übrigen im Abformmaterial und dient der Fixierung des Laborimplantates mit Hilfe der Abdruckschraube.

Zu erheblichen Schwierigkeiten bei der Verwendung des vorgeschlagenen Abformlöffels dürfte allerdings der Prozess des Abtragens von Abformmaterial über der Schraube führen, der für sich allein schon aufwändig, aufgrund der Aushärtung des Abformmaterials aber auch noch zeitlich limitiert ist. Außerdem müsste die exakte Position der Schraube erst ermittelt und sodann der Schraubenkopf zumindest derart von dem Abformmaterial befreit werden, dass mit einem Schraubenzieher oder ähnlichem in die Schraube eingegriffen werden kann. Zudem ist noch von Nachteil, dass das Zusammenspiel zwischen Abdruckpfosten und aufgesetztem Abformlöffel nicht mehr überprüft und notfalls korrigiert werden kann, da der Abdruckpfosten in seiner zum Abformlöffel relativen Position nicht mehr sichtbar ist.

Aus der US 2003/0138754 A1 ist ein Abformlöffel für einen Doppelabdruck bekannt, bei dem der für den Oberkiefer vorgesehene Bereich durch einen flexiblen Bereich von dem für den Unterkiefer vorgesehenen Bereich getrennt ist. Dieser flexible Bereich soll aber gerade nicht von einem Abdruckpfosten durchstoßbar sein.

Die US 4,708,654 A1 beschreibt einen Abformlöffel, der zur Durchführung eines Abdruckpfostens eine Öffnung aufweist. Die Öffnung ist jedoch nicht abgedeckt und folglich könnte Abformmaterial durch die Öffnung austreten.

Aufgabe der Erfindung ist es, einen Abformlöffel vorzuschlagen, bei dessen Verwendung die Stuhlzeiten reduziert, die Präzision eines Implantat-Modells erhöht und schließlich die Material und Arbeitskosten gesenkt werden.

Die Aufgabe wird erfindungsgemäß dadurch gelöst, dass der durchstoßbare Abschnitt der Wandung ein Gewebe, ein Vlies, eine Folie oder eine Membran ist.

Durch die Erfindung werden die Vorteile der jeweiligen bekannten Abformtechniken verbunden. Zum einen kann auf die Anfertigung eines individuellen Abformlöffels verzichtet werden, indem der erfindungsgemäße Abformlöffel als konfektionierter "Einmal- oder Mehrfachserienlöffel" in entsprechenden Standardgrößen hergestellt wird. Zum anderen kann die Implantatabformung weiterhin in der allseits favorisierten und präzisen Pick-up-Technik durchgeführt werden, da die Wandungen des Abformlöffels - zumeist die Bodenwandung- leicht von den Abdruckpfosten durchstoßen werden kann. Das ist deshalb von Vorteil, weil dadurch der Abdruckpfosten nach dem Abbinden des Abformmaterial wieder entfernt und die fertige Abformung aus dem Mund genommen werden kann. Außerdem wird das Austreten von Abformmaterial mit den damit verbundenen negativen Folgen wirksam verhindert.

Durch die einfache Handhabung und Sicherheit ergibt sich durch den erfindungsgemäßen Abformlöffel eine Zeitersparnis, die dem Zahnarzt und dem Patienten nützt.

Eine Kostensenkung ergibt sich zudem allein schon deshalb, weil zuvor handgefertigte Unikate durch Serienteile ersetzt werden..

Nicht zuletzt werden gesundheitsschädliche zahntechnische Arbeiten, wie sie bei der Herstellung individueller Abformlöffel durch die Entstehung von Quarzstäuben vorkommen, vermieden.

Wird der durchstoßbare Abschnitt von einer Membran gebildet, so ist es vorteilhaft, wenn diese eine selbstklebende Membran ist.

Eine Weiterbildung der Erfindung ist noch, dass der Abformlöffel aus ein Gerüst bildenden Verstrebungen und einer dazwischen befindlichen Membran besteht, um so eine größtmögliche Variabilität hinsichtlich der möglichen Implantatplatzierungen sowie der Implantatausrichtung bei dennoch stabilisierenden Rahmen zu ermöglichen.

Eine Weiterbildung der Erfindung soll noch sein, dass der Abdruckpfosten für eine bessere Durchdringbarkeit des Abformmaterials und der Wandung des Abformlöffels eine für den Durchtritt förderlich Endgeometrie zum Beispiel Zuspitzungen bzw. Schneidkanten oder eine entfernbare Kappe mit entsprechender Endgeometrie aufweist. Selbstverständlich erstreckt sich der Schutzbereich der Erfindung ohne irgendwelche Einschränkungen auch auf den veterinärmedizinischen Bereich, da alle geschilderten Vorteile ebenso gut Tieren bzw. ihren Haltern zugute kommen.

Im folgenden soll die Erfindung anhand eines Ausführungsbeispiels beschrieben werden.

Es zeigt
- Fig. 1: eine perspektivische Ansicht auf die mit Abformmaterial zu befüllende Seite eines erfindungsgemäßen Abformlöffels,
- Fig. 2: den Abformlöffel gemäß Fig. 1 jedoch von der anderen Seite und einen Teil eines Abdruckpfostens,
- Fig. 3: einen teilperspektivischen Schnitt durch einen Implantatkörper sowie einen erfindungsgemäßen Abdruckpfosten und

Fig. 4 einen teilperspektivischen Schnitt durch ein zweiphasiges Zylinderimplantat.

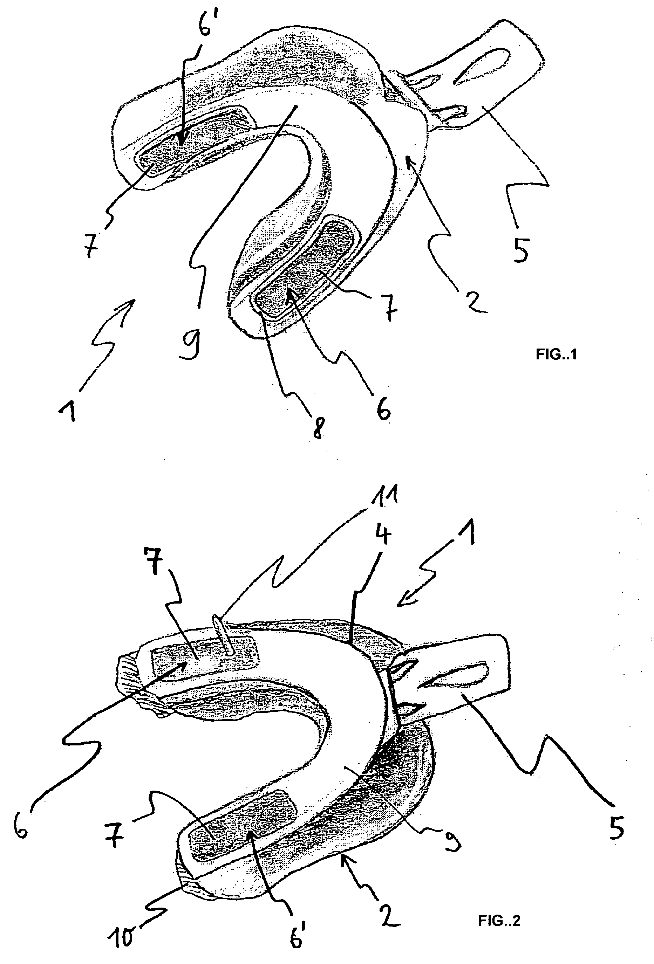

Der in Fig. 1 und Fig. 2 dargestellte einstückige Abformlöffel 1 aus Kunststoff, insbesondere aus Zwei-Komponenten Spritzgusskunststoff, weist einen konkav geformten und einem Kiefer bzw. Kieferteil angepassten Abformkörper 2 auf, an dessen Seitenkante 4 sich ein Löffelgriff 5 anschließt. Auf der linken und rechten Seite des Abformkörpers 2 sind Abschnitte der Wandung 6, 6' mit besonders dünner Wandstärke als Folie 7 bzw. Membran aus demselben Kunststoffmaterial wie der übrige Abformkörper 2 ausgeführt. Dabei wird der Übergang von der ansonsten etwa zwei bis vier Millimeter dicken Wandung 9 des Abformkörpers 12 bis zu der nur etwa zweihundert Mikrometer dünnen Folie 7 durch einen etwa zwei Millimeter breiten Übergangsbereich 8 gebildet.

Die Fig. 2 soll den Gebrauch des erfindungsgemäßen Abformlöffels 1 verdeutlichen. Der Abformlöffel 1 ist mit Abformmaterial 10 teilweise gefüllt und befindet sich festgedrückt in seiner End- bzw. Aushärteposition auf einem hier nicht gezeigten Kiefer mit einem hier ebenfalls nicht gezeigten, in den Kiefer eingesetzten Implantatkörper 2 und einem in diesen eingeschraubten Abdruckpfosten 11. Der Abdruckpfosten 11 hat im Abschnitt der Wandung 6 die Folie 7 lokal begrenzt durchstoßen, ohne dass Abformmaterial 10 nachfließen würde. Nicht gezeigt ist eine für die spätere präzise Positionierung eines Laborimplantatkörpers benötigte Abdruckpfostenhülse, die den Abdruckpfosten 11 seitlich umschließt.

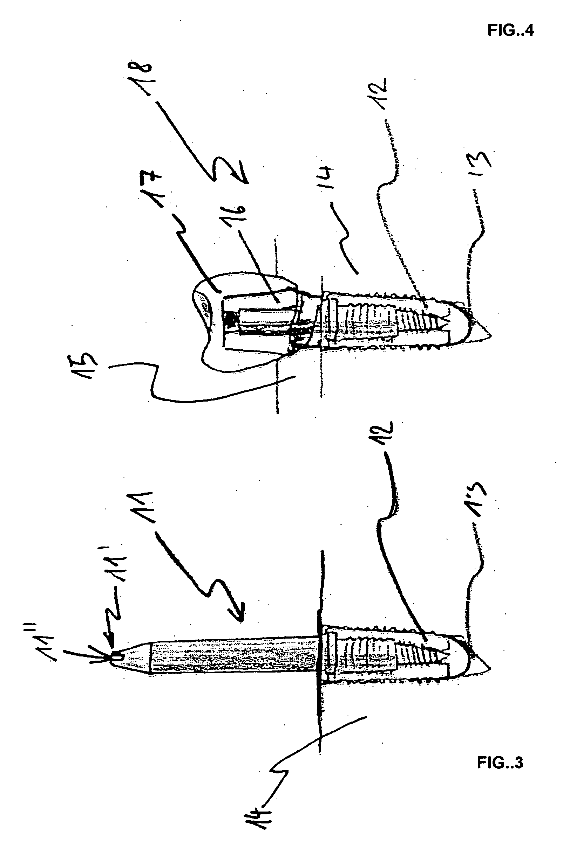

Die Fig. 3 zeigt nochmals den erfindungsgemäßen Abdruckpfosten 11 mit Zuspitzung 11' und Schlitz 11", eingeschraubt in einen Implantatkörper 12, welcher in eine Bohrung 13 des Kieferknochens 14 eingebracht wurde. Nicht gezeigt ist eine erfindungsgemäße entfernbare Kappe, welche durch ihre Zuspitzung beispielsweise in Form eines Kegels besonders einfach Abformmaterial und Wandung 6, 6' des Abformlöffels 1 durchdringen kann.

Die Fig. 4 zeigt ein bekanntes in den Kieferknochen 14 und das Zahnfleisch 15 eingeheiltes Zylinderimplantat 18 bestehend aus dem Implantatkörper 12, einem Implantataufbau 16 sowie der auf diesem aufsitzenden Krone 17.

In hier nicht gezeigten erfindungsgemäßen Alternativen ist für den Abformlöffel 1 und die Folie 7 verschiedenes Material vorgesehen. So kann der Abformlöffel 1 auch aus Metall bestehen, das Durchbrüche im Bereich der Wandung 6, 6' aufweist, die noch mit Folie 7, Vlies oder laminiertem Gewebe überdeckt ist. Deshalb fällt ein gebräuchlicher Metall-Konfektionslöffel, sofern er eine Aussparung aufweist, die mit handelsüblichen Klebestreifen - z. B. einseitigem Klebeband -- überdeckt ist, selbstverständlich auch in den Erfindungsbereich.

Ebenfalls nicht gezeigt sind Alternativen, bei denen die durchstoßbare Wandung 6, 6' einen kompletten Wandungsbereich des Abformlöffels 1 einnehmen kann, wie zum Beispiel den Bodenbereich des Abformlöffels 1.

Ebenso soll eine nicht gezeigte Alternative sein, dass gewölbte Abdeckungen bzw. durchstoßbare Wandungen 6, 6' bei extremer Schiefstellung der Implantate 18 verwendet werden. Auch sind Alternativen nicht gezeigt, die noch Variationen der Verbindung von durchstoßbarer Wandung 6, 6' und dem Abformlöffel 1 betreffen. So kann beispielsweise die durchstoßbare Wandung 6, 6' von innen wie von außen mit unterschiedlich breiten Überlappungsbereichen am Abformlöffel 1 befestigt werden. Die Befestigung kann dabei beispielsweise durch Kleben oder durch ein mechanisches Spannen und/oder Klemmen erreicht werden.

### Bezugszeichenliste

- 1: Abformlöffel
- 2: Abformkörper
- 4: Seitenkante
- 5: Löffelgriff
- 6, 6': Wandung
- 7: Folie
- 8: Übergangsbereich
- 9: Wandung
- 10: Abformmaterial
- 11: Abdruckpfosten
- 11': Zuspitzung
- 11": Schlitz
- 12: Implantatkörper
- 13: Bohrung
- 14: Kieferknochen
- 15: Zahnfleisch
- 16: Implantataufbau
- 17: Krone
- 18: Zylinderimplantat

## Patentansprüche

1. Abformlöffel (1) mit konkavem Löffelkörper (2), welcher zum Abformen lediglich eines Kieferteils ausgebildet ist, in dem sich mindestens ein Implantatkörper (12) befindet, der eine Aufnahmeöffnung besitzt, in die ein Abdruckpfosten (11) einsetzbar ist, wobei der Abformlöffel (1) mit einem fließfähigen, aushärtbaren Abformmaterial (10) zur Herstellung einer Form für ein Modell des Kieferteils befüllbar ist, wobei der Löffelkörper (2) zumindest in einem Abschnitt eine Wandung (6, 6') aufweist, die von einem in dem Implantatkörper (12) eingesetzten Abdruckpfosten (11) durchstoßbar ist, wenn der Abformlöffel (1) auf das Kieferteil aufgesetzt wird, **dadurch gekennzeichnet, dass** der durchstoßbare Abschnitt der Wandung (6, 6') ein Gewebe, ein Vlies, eine Folie (7) oder eine Membran ist.

2. Abformlöffel nach dem vorgenannten Anspruch, **dadurch gekennzeichnet, dass** der durchstoßbare Abschnitt der Wandung (6, 6') eine selbstklebende Membran ist.

3. Abformlöffel (1) nach mindestens einem der Ansprüche 1 und 2, **dadurch gekennzeichnet, dass** der Abformlöffel (1) aus ein Gerüst bildenden Verstrebungen und einer dazwischen befindlichen Membran besteht.

4. Zahnmedizinisches Set, bestehend aus einem Abformlöffel (1) nach einem der Ansprüche 1 bis 3 und mindestens einem Abdruckpfosten (11), der in eine Aufnahmeöffnung eines Implantatkörpers (12) einsetzbar ist, zur Abformung in einem aushärtbaren Abformmaterial, wobei der Abdruckpfosten (11) eine Zuspitzung (11') und/oder eine Schneidkante, oder eine entfernbare Kappe mit Zuspitzung oder Schneidkante für eine druckreduzierte Durchdringung des Abformmaterials (10) und der durchstoßbaren Wandung (6, 6') des Abformlöffels (1) aufweist.

## Claims

1. An impression tray (1) with concave tray body (2) that is designed for only taking impressions of a jaw section, in which at least one implant body (12) is situated, wherein said implant body has a receptacle opening, into which an impression coping (11) can be inserted, wherein the impression tray (1) can be filled with a free-flowing, curable impression material (10) for producing a mould for a model of the jaw section, and wherein at least one section of the tray body (2) features a wall (6, 6') that can be penetrated by an impression coping (11) inserted into the implant body (12) when the impression tray (1) is placed onto the jaw section, **characterized in that** the penetrable section of the wall (6, 6') is a woven fabric, a non-woven fabric, a foil (7) or a membrane.

2. The impression tray according to the preceding claim, **characterized in that** the penetrable section of the wall (6, 6') is a self-adhesive membrane.

3. The impression tray (1) according to at least one of Claims 1 and 2, **characterized in that** the impression tray (1) consists of bracings that form a frame and a membrane situated between the bracings.

4. A dental set consisting of an impression tray (1) according to one of Claims 1 to 3 and at least one impression coping (11) that can be inserted into a receptacle opening of an implant body (12) in order to take an impression in a curable impression material, wherein the impression coping (11) features a tapering (11') and/or a cutting edge or a removable cap with a tapering or cutting edge in order to penetrate the impression material (10) and the penetrable wall (6, 6') of the impression tray (1) with reduced pressure.

## Revendications

1. Porte-empreintes (1) avec un corps (2) concave, lequel est conçu pour prendre l'empreinte d'une seule partie de mâchoire, dans lequel se trouve au moins un corps d'implant (12) lequel comporte un orifice de logement dans lequel est insérable un transfert (11), le porte-empreintes (1) pouvant être rempli d'un matière d'empreinte (10) fluide durcissable, pour la création d'un moule de la partie de mâchoire, le corps (2) comportant au moins dans une partie une paroi (6, 6') laquelle peut être percée par un transfert (11) inséré dans le corps d'implant (12) lorsqu'on place le porte-empreintes (1) sur la partie de mâchoire, **caractérisé en ce que** le partie perçable de la paroi (6, 6') est un tissu, un non-tissé, un film (7) ou une membrane.

2. Porte-empreintes selon la revendication précédente, **caractérisé en ce que** la partie perçable de la paroi (6, 6') est une membrane autocollante.

3. Porte-empreintes (1) selon la revendication 1, **caractérisé en ce que** le porte-empreintes (1) consiste dans des entretoisements formant un support et dans une membrane placée entre ces derniers.

4. Kit médical dentaire, consistant dans une porte-empreintes (1) selon l'une quelconque des revendications 1 à 3 et dans au moins un transfert (11) lequel est insérable dans un orifice de logement d'un corps d'implant (12) pour prendre une empreinte dans une matière d'empreinte durcissable, le transfert (11) comportant un effilement (11') et/ou une arête coupante ou un capuchon amovible avec effilement ou arête coupante pour traverser la matière d'empreinte (10) et la paroi (6, 6') perçable du porte-empreintes (1), tout en réduisant la pression.
